(19) Europäisches Patentamt

European Patent Office

Office européen des brevets

(11) **EP 0 749 995 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.$^7$: **C08G 18/42**

(21) Anmeldenummer: **96108900.0**

(22) Anmeldetag: **04.06.1996**

(54) **Polyurethanelastomere aus aliphatischen Polyisocyanaten und Polyesteretherpolyolen**

Polyurethane elastomers from aliphatic polyisocyanates and polyester ether polyols

Elastomères de polyuréthane à partir de polyisocyanates aliphatiques et des polyols de polyesteréther

(84) Benannte Vertragsstaaten:
**BE DE ES FR GB IT NL SE**

(30) Priorität: **16.06.1995 DE 19521798**

(43) Veröffentlichungstag der Anmeldung:
**27.12.1996 Patentblatt 1996/52**

(73) Patentinhaber: **BAYER AG**
**51368 Leverkusen (DE)**

(72) Erfinder:
• **Mayer, Eduard, Dr.**
  **41539 Dormagen (DE)**
• **Grönen, Jürgen, Dr.**
  **51491 Overath (DE)**

(56) Entgegenhaltungen:
**EP-A- 0 093 335      US-A- 4 529 744**

**Beschreibung**

Die Erfindung betrifft Polyurethanelastomere hergestellt durch Umsetzung von Polyisocyanaten mit Polyesterpolyetherpolyolen (Diesterpolyetherdiolen) nach dem Reaktionsspritzgußverfahren (reaction injection molding, RIM).

Die Herstellung von verstärkten, insbesondere harten gegebenenfalls Harnstoff enthaltenden Polyurethanelastomeren nach dem Reaktionspritzgußverfahren mit einer Dichte über 0,9 g/cm$^3$ ist bekannt. Sie werden durch Vernetzung von aromatischen Polyisocyanaten mit Polyether- oder Polyesterpolyolen erhalten (z.B. DE-A 25 13 817). Im allgemeinen wird eine aromatische Diaminkomponente, beispielsweise DETDA (technisches Gemisch aus 1-Methyl-3,5-diethyl-2,4- und -2,6-diaminobenzol), zugesetzt (z.B. DE-A 38 27 595). So hergestellte Formkörper weisen ein hohes mechanisches Werteniveau auf wie E-Modul, Biegemodul, Bruchdehnung, Härte. Sie eignen sich fiir eine Vielzahl von Anwendungen, beispielsweise im Automobilbereich.

Nachteilig bei der Anwendung von Formteilen auf der Basis von aromatischen Polyisocyanaten und/oder aromatischen Aminkomponenten ist, daß sie durch Bewitterung oder Sonneneinstrahlung vergilben und zusätzlich in der Oberfläche aufrauhen, so daß diese Formteile für erhöhte Ansprüche, beispielsweise im Automobilaußenbereich nachträglich lackiert werden müssen.

Aus beispielsweise der DE-A 27 36 685 ist bekannt, daß die Verwendung von Glykolen als Vernetzer bei der Umsetzung mit aromatischen Isocyanaten unter heutigen Produktionsgesichtspunkten zu kaum noch vertretbaren Formstandzeiten von mindestens 2 Minuten führen.

Die Vermeidung von Vergilbung von nach dem Reaktionsspritzgußverfahren hergestellten PUR-Systemen ist besonders wichtig im Hinblick auf direkt eingefärbte Formteile. PUR-Systeme, die zu direkt eingefärbten Formteilen führen, ermöglichen es den arbeitsintensiven und teuren Lackiervorgang einzusparen. Dadurch werden dann die Herstellungskosten von der Witterung ausgesetzten Formteilen reduziert.

Der naheliegende Gedanke diese Erfahrungen auch bei der nach dem RIM-Verfahren hergestellten Elastomeren einfließen zu lassen, scheiterte bislang einerseits an ungünstigen Entformungszeiten und andererseits an der Schwierigkeit große Mengen an Füllstoffen, insbesondere faserige oder flächige Füllstoffe in derartige Formulierungen einzuarbeiten (DE-A 27 36 685, 25 13 817). Arbeitet man z.B. nach der Lehre von DE-A 25 13 817 beispielsweise Glasfaser in ein dieser Erfindung entsprechendes Polyolgemisch ein, so separiert diese, was zu erheblichen Problemen bei der technischen Anwendung führen kann.

Wesentlich sind eine sichere Produzierbarkeit und schnelle Entformungszyklen bei hohem mechanischem Eigenschaftsniveau, insbesondere Härte und Biegemodul. Nur dann sind diese Werkstoffe als Formteile, beispielsweise im Automobilaußenbereich geeignet. Hohe Entformungszyklen lassen sich bei geeigneter Katalyse insbesondere durch die Verwendung von internen Trennmitteln verbessern. Äußere Trennmittel verlangsamen den Arbeitsablauf, da sie in einem zusätzlichen Arbeitsgang aufgetragen werden müssen.

Wie die DE-A 27 36 685 für auf aliphatischen Isocyanaten basierenden Rezepturen lehrt, werden im allgemeinen Entformungszeiten von ca. 5 Minuten benötigt. In der DE-A 27 10 901 wird von Klebfreizeiten (nicht identisch mit Entformungszeiten), die durch spezielle Katalysatorkombinationen ermöglicht werden, von ca. 1 Minute berichtet. Für eine industrielle Fertigung von Formteilen für dem Automobilbereich sind auf der Basis von aromatischen Polyisocyanaten in Kombination mit aromatischen Vernetzerkomponenten (beispielsweise Detda) Entformungszeiten von ca. 30 s realisiert (DE-A 38 27 595). Dabei ist es ebenfalls möglich, große Mengen an Füllstoffen in das Elastomer einzuarbeiten.

Die Herstellung von Urethangruppen und Füllstoffen aufweisenden Polyharnstoffelastomeren nach dem Prinzip der Reaktionsspritzgußtechnik unter Verwendung von Polyisocyanaten oder Polyisocyanatgemischen der Diphenylmethanreihe, höhermolekularen Polyetherpolyolen und alkylsubstituierten aromatischen Diaminen ist bereits aus DE-A 26 22 951 (= US-PS 42 18 543) und DE-A 38 27 595 bekannt, wobei sowohl das One-Shot-Verfahren als auch die Semiprepolymertechnik verwendet werden kann.

In der DE-A 25 13 817 wird die Verwendung von Polyester im Vernetzergemisch beschrieben. Jedoch wird bei Mitverwendung von Polyestern ein ungünstiges Glashaltevermögen und Phasenstabilität (es bilden sich zwei Phasen) des Polyolgemischs (loc. cit. Beispiel 20) beobachtet. Bei der alleinigen Verwendung von Polyetherpolyolen wird außerdem eine wesentlich weichere Polymermatrix erhalten, was die Mechanik daraus hergestellter Formteile ungünstig beeinflussen kann.

In EP-A 93 335 wird ein Verfahren zur Herstellung von Formkörpern auf Basis von Polyurethan- oder Polyurethan-Polyharnstoff-Elastomeren beansprucht, wobei als Polyolkomponente Polyhydroxylverbindungen aus der Gruppe der (i) Polyesterpolyole (hergestellt durch Polykondensation von organischen Dicarbonsäuren und einer Polyolmischung aus mindestens 3 Polyolen und/oder (ii) Polyetherpolyesterpolyolen mit endständigen Polyesterpolyol-Gruppen. Als Isocyanatkomponente werden bevorzugt aromatische mehrwertige Isocyanate eingesetzt.

Aufgabe der vorliegenden Erfindung ist es, ein im industriellen Maßstab durchführbares und wirtschaftlich vorteilhaftes Verfahren aufzuzeigen, das die Verwendung von aliphatischen oder alicyclischen Polyisocyanaten zur Herstellung von einfärbbaren Polyurethanen mit guten Oberflächen bzw. Integralhautflächen, die unter kombinierter Einwirkung von Licht und Sauerstoff gegenüber Verfärbung stabil sind und, aufgrund ihrer physikalischen Eigenschaften z.B. bei Automobilaußenanwendungen, ohne zusätzliche Lackierung geeignet sind.

Überraschenderweise wurde jetzt gefunden, dass die Verwendung von speziellen Polyesterethern in der als Vernetzergemisch bezeichneten flüssigen Polyolmischung bei der Herstellung von einfärbbaren, lichtechten Polyurethanen auf der Basis von aliphatischen oder alicyclischen Polyisocyanaten zu einer Reihe bemerkenswerter Vorteile, insbesondere auch bei der Verwendung von Füllstoffen, führt.

Gegenstand der Erfindung sind gegebenenfalls Harnstoffgruppen aufweisende Polyurethan-Elastomere auf der Basis von

a) einer flüssigen, aliphatischen und/oder alicyclischen Polyisocyanatkomponente,

b) einer isocyanatreaktiven Verbindung mit einem mittleren Molekulargewicht von 1000 bis 6000 und einer mittleren Funktionalität $\geq 2$,

c) isocyanatreaktive Verbindungen mit einem Molekulargewicht <1000, bevorzugt <500, wobei mindestens eine dieser Verbindungen eine Funktionalität $\geq 2$ aufweist,

d) Füllstoffen auf Elastomer bezogen, 1 bis 30 Gew.-%,

e) gegebenenfalls den in der Polyurethanchemie an sich bekannten Hilfs- und Zusatzmitteln,

unter Einhaltung einer Isocyanatkennzahl von 90 bis 120,
dadurch gekennzeichnet, dass in der Komponente c) mindestens eine der isocyanatreaktiven Verbindungen ein Polyesteretherpolyol mit 3 - 7 Estergruppen/kg Polyesteretherpolyol ist, wobei das Polyesteretherpolyol durch Umsetzung von aromatischen Carbonsäureanhydriden mit (oligo) Ethylenglykolen und anschließender Ethoxylierung erhalten wird.

Die erfindungsgemäßen Polyurethan-Elastomeren werden nach dem Reaktionsspritzgussverfahren (RIM-Verfahren) hergestellt.

Ein weiterer Gegenstand der Erfindung ist daher ein Reaktionsspritzgussverfahren zur Herstellung von gegebenenfalls zellförmigen, elastischen Formkörpern mit einer geschlossenen Oberflächenschicht und einer Dichte von >0,9 g/cm³ aus gegebenenfalls Harnstoffgruppen aufweisenden Polyurethanelastomeren auf der Basis von

a) einer flüssigen, aliphatischen und/oder alicyclischen Polyisocyanatkomponente,

b) einer isocyanatreaktiven Verbindung mit einem mittleren Molekulargewicht von 1000 bis 6000 und einer mittleren Funktionalität$\geq 2$,

c) mindestens einer isocyanatreaktiven Verbindung mit einem Molekulargewicht <1000, bevorzugt <500, und einer Funktionalität$\geq 2$,

d) Füllstoffen auf Elastomer bezogen, 1 bis 30 Gew.-%,

e) gegebenenfalls den in der Polyurethanchemie an sich bekannten Hilfs- und Zusatzmitteln,

dadurch gekennzeichnet, dass in Komponente c) mindestens eine der isocyanatreaktiven Verbindungen ein Polyesteretherpolyol mit 3-7 Estergruppen/kg Polyesteretherpolyol ist, wobei das Polyesteretherpolyol durch Umsetzung von aromatischen carbonsäureanhydriden mit (oligo) Ethylenglycolen und anschließender Ethoxylierung erhalten wird.

Das erfindungsgemäß verwendete, mit Füllstoffen beladene, Polyolgemisch c) ist sedimentationsstabil, auch über mehrere Tage. Es ist nach dem Reaktionsspritzgußverfahren problemlos verarbeitungsfähig, d.h. es kommt auch bei Stillstand der Anlage nicht zu sedimentationsbedingten Verstopfungen im Leitungssystem. Das Polyolgemisch ist einphasig.

Verwendet man beispielsweise ein Polyetherpolyol bzw. eine Polyetherpolyolmischung (z.B. gemäß DE-A 27 36 685) mit der gleichen OH-Zahl und Funktionalität wie das im erfindungsgemäßen Vernetzergemisch (Beispiel 19) eingesetzte Polyesteretherpolyol, so führt die Einarbeitung von Füllstoffen in dieses Vernetzergemisch schnell zur Separation des Füllstoffs von der Flüssigkeit (siehe Beispiel 20). Ebenfalls ist Separation zu beobachten, wenn man in Beispiel 19 die erfindungsgemäße Komponente entfernt und gewichtsmäßig durch den verwendeten langkettigen Polyether ersetzt (loc.cit. Beispiel 21).

Die erfindungsgemäß hergestellten Polyurethan-Elastomeren können eingefärbt werden und können zu Licht- und sauerstoffstabilen Formkörpern verarbeitet werden, die nicht vergilben.

Die erfindungsgemäß eingesetzten Polyesteretherpolyole (Diesterpolyetherdiole) haben 3 bis 7, bevorzugt 5 bis 6 Mol Estergruppen/kg Polyesteretherpolyol. Sie werden durch Umsetzung von aromatischen Carbonsäureanhydriden mit (oligo) Ethylenglykolen und anschließende Ethoxylierung erhalten. Vorzugsweise werden sie aus Phthalsäureanhydrid, Diethylenglykol und Ethylenoxid hergestellt. Sie haben einen Aromatengehalt von 40 bis 60 Gew.-% und einen Ethylenoxidgehalt -($CH_2CH_2O$)- von 40 bis 60 Gew.-%.

Das eingesetzte Polyesteretherpolyol beträgt in der Komponente c) 10 bis 42 Gew.-%, vorzugsweise 19 bis 42 Gew.-% bei einer Kennzahl 100, bezogen auf Polymermatrix ohne Füllstoffe.

Der Urethangruppengehalt bezogen auf Polymermatrix bei Kennzahl 1 ohne Füllstoffe ist größer 1,4 Mol/kg Elastomer, bevorzugt 1,8 bis 3 Mol/kg.

Die Knotendichte im Elastomer ist größer 0,5, bevorzugt 0,8 bis 1,9 Mol Knoten/kg Elastomer.

Die erfindungsgemäßen Polyurethanelastomeren können im Automobilbau z.B. zur Herstellung von Automobilteilen wie Stoßfänger, (Tür-, Kotflügel)schweller, Schutzleisten usw. verwendet werden.

Als Isocyanatkomponenten a) seien die aliphatischen, cycloaliphatischen, araliphatischen genannt, wie sie z.B. in Justus Liebigs Annalen der Chemie, 562, S. 75-136, beschrieben werden. Bevorzugt sind aliphatische und cycloaliphatische Diisocyanate wie z.B. 1,6-Hexamethylendiisocyanat (HDI), 1,4-Diisocyanatocyclohexan, l-Isocyanato-2,2,5-trimethyl-5-isocyanatomethyl-cyclohexan (IPDI), 4,4-Düsocyanato-dicyclohexyl-methan oder Xylylendiisocyanat, besonders bevorzugt die biuretisierten und/oder allophanatisierten und/oder trimerisierten Varianten dieser Isocyanate, insbesondere die von HDI bzw. IPDI.

Als isocyanatreaktive Verbindungen b) werden Polyetherpolyole bzw. deren Gemische eingesetzt, die in an sich bekannter Weise durch Alkoxylierung von geeigneten Startermolekülen oder -gemischen hergestellt werden, wobei zur Alkoxylierung insbesondere Propylenoxid und gegebenenfalls zusätzlich Ethylenoxid verwendet werden. Sie haben ein mittleres Molekulargewicht von 1 000 bis 6 000 und eine mittlere Funktionalität von >=2. Geeignete Startermoleküle sind z.B. Wasser, Ethylenglykol, Propylenglykol, Trimethylenpropan, Glycerin, Pentaerythrit, Sorbit oder Rohrzucker. Bevorzugt sind solche Polyetherpolyole, die einen primären OH-Gruppengehalt von mehr als 50 % besonders bevorzugt größer 70 % aufweisen. Derartige Polyetherpolyole entstehen durch endständiges Aufpropfen von Ethylenoxid. Geeignet sind auch Polyetherpolyole, die der Definition unterliegen und dispergierte Füllstoffe enthalten, wie sie z.B. durch Polymerisation von Acrylnitril und Styrol in den Polyethern als Reaktionsmedium entstehen (DE-A 3 827 595 und darin aufgeführte Literatur).

Isocyanatreaktive Verbindungen c) außer des Polyetheresters b) haben ein mittleres Molekulargewicht <1 000, bevorzugt <500, z.B. Ethylenglykol, 1,4-Butandiol, Hexandiol, Diethylenglykol, Neopentylglykol oder deren Mischungen. 2-Methyl-1,3-Propandiol-Mischungen können ebenfalls monofunktionelle Alkohole enthalten.

Komponenten d): Als Füllstoffe werden mineralische oder organische Stoffe verwendet, vorzugsweise Fasern (z.B. Glasfasern).

Als Komponenten e) werden Farbstoffe, Pigmente, Treibmittel und/oder innere Trennmittel wie Zinkstearat oder Polyetherpolysiloxane eingesetzt. Derartige an sich bekannte Hilfs- und Zusatzmittel sind beispielsweise in EP-A 81 701 beschrieben.

## Beispiele

Die Verarbeitung der in den folgenden Beispielen beschriebenen Rezepturen erfolgte mit Hilfe der Reaktionsspritzgußtechnik.

Die NCO-Gruppen enthaltenden Verbindungen (= Komponente A) und die Komponente B wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen äußeren Formtrennmittel auf Seifenbasis RTCW 2006 der Fa. Chem Trend beschichtet war.

Das Plattenwerkzeug aus Stahl erlaubt die Herstellung von Prüfplatten der Abmessungen 300 x 200 x 3 mm. Das Füllen des Werkzeugs erfolgt von der Längsseite über einen Staubalkenanguß.

Charakterisiert wurden die Elastomere durch die Shore Härte D/A (DIN 53 505), Rohdichte (DIN 53 420), Spannung, Reißfestigkeit, Bruchdehnung (DIN 53 504) und Weiterreißfestigkeit (DIN 53 515).

Erfindungsgemäße Beispiele sind in den Tabellen 1a bis 1c zusammengefaßt; nicht erfindungsgemäße Beispiele stehen in Tabelle 2. Beispiele 19 bis 24 beschreiben das Haltevermögen fiir Füllstoffe. Die in Klammern [ ] angegebenen Werte entsprechen Gewichts.-% im Elastomer (bei KZ 100). H U = Mol Harnstoff : Mol Urethan/kg Elastomer (bei KZ 100);

$$\text{Mol Knoten/kg Elastomer} = \sum_{i=1}^{n} (g_i / \sum_{i=1}^{n} g_i) * (f_i - 2) * 1000 / MG_i$$

mit n = Anzahl aller Komponenten, gi = Gewichtsteile der Komponente i, fi = Funktionalität der Komponente i, MGi = Molekulargewicht der Komponente i in [g]; falls fi = 0, dann ist Mol Knoten/kg = 0.

Aliphatisches Isocyanat mit f = 2 und MG = 174 reagiert mit trifunktionellem Polyol mit MG = 300

Beispielberechnung

| 1. Knotendichte Isocyanat | = | (2-2)*1000/174 | [Mol Knoten/kg] |
| | = | 0 | |
| 2. Knotendichte Polyol | = | (3-2)*1000/300 | [Mol Knoten/kg] |
| | = | 3,33 | |
| 3. Mischungsverhältnis aliphatisches Isocyanat: Polyol | = | Polyol für Kennzahl = 1 | |
| | = | 87:100 | |
| 4. Knotendichte Elastomer | = | (0*87+100*3,33)/(87+100) 1,782 | [Mol Knoten/kg] |

**Beschreibung der Komponenten:**

Polyol 1

Polyetheresterpolyol mit OHZ 310, hergestellt durch Umsetzung von 1 Mol Phthalsäureanhydrid mit 2 Mol Diethylenglykol und anschließende Ethoxylierung des Polyesters

Polyol 2

Polyetherpolyol mit OHZ 28, hergestellt durch Propoxylierung von Propylenglykol und anschließende Ethoxylierung (PO : EO = 79 : 21)

Polyol 3

Polyetherpolyol mit OHZ 630, hergestellt durch Propoxylierung von Ethylendiamin

Polyol 4

Polyetherpolyol mit OHZ 28, hergestellt durch Propoxylierung von. Trimethylolpropan und anschließender Ethoxylierung (PO : EO = 86,5 : 13,5)

Polyol 5

Polyetherpolyol mit OHZ 550, hergestellt durch Ethoxylierung von Trimethylolpropan

Polyol 6

Polyetherpolyol mit OHZ 330, hergestellt durch Propoxylierung von Buten-2-diol-1,4

Polyol 7

Polyetherpolyol mit OHZ 190, hergestellt durch Propoxylierung von Propylenglykol und anschließende Ethoxylierung (PO : EO = 0,6 : 99,4)

Polyol 8

Polyetherpolyol mit OHZ = 270 hergestellt durch Propoxylierung von Propylenglykol

Polyol 9

Polyrizinolsäureester auf Hexandiolbasis mit OHZ von 35

Polyol 10

Polyester aus Phthalsäureanhydrid und Diethylenglykol mit OHZ 318

Polyol 11

Polyetherpolyol mit OHZ 28, hergestellt durch Propoxylierung von Trimethylolpropan und anschließender Ethoxylierung (Gewichtsverhältnis PO:EO = 78:22)

Polyol 12

Jeffamine D 400® Polyetherdiamin (auf PO-Basis) der Fa. Texaco mit MG = 400

Tinuvin B 75®

UV-Stabilisator der Fa. Ciba Geigy NHZ = 53

Rotpaste

Polyetherpolyol mit OHZ 28, (PO:EO = 87:13) hergestellt durch Propoxylierung von Trimethylolpropan und anschließender Ethoxylierung, enthaltend ca. 15 % Farbstoffpulver

Fomrez UL 28®

Dimethyl-zinn-dilaurat

DBTL®

Dibutyl-zinn-dilaurat

Dabco 33 LV®

33 %ige Lösung von Triethylendiamin in Dipropylenglykol

B 8901®

handelsübliches Polyetherpolysiloxan der Fa. Goldschmidt, Essen

A1100®

Aminosilan: 1-Amino-3-triethoxysilan-propan
Tegomer HS; 2311®: $\alpha,\omega$-hydroxyfunktionale Polydimethylsiloxane mit Funktionalität 2 und OHZ von 45 von Fa. Goldschmidt

Desmodur N3300® der Bayer AG

Hexamethylendiisocyanat-Trimerisat, NCO-Gehalt 21,6 %, Funktionalität ca. 3,5 MF 7980®: Glasfaser der Bayer AG

Tabelle 1a

| Erfindungsgemäße Beispiele | | | |
|---|---|---|---|
| Beispiel | 1 | 5 | 8 |
| Polyol 1 | 87,97 [36,56] | 46,85 [29,90] | 41,43 [26,46] |
| Polyol 2 | *** | 42,16 [26,91] | 49,97 [31,92] |
| Ethylenglykol | 7,04 [2,92] | *** | *** |
| Tinuvin B 75® | 2,46 [1,02] | 1,64 [1,05] | 1,61 [1,03] |
| Fomrez® UL 28 | 1,94 [0,82] | 1,26 [0,81] | 1,25 [0,80] |
| Dabco 33 LV® | 0,48 [0,20] | 0,32 [0,20] | 0,31 [0,20] |
| DBTDL® | 0,11 [0,05] | 0,08 [0,05] | 0,08 [0,05] |
| Rotpaste | *** | 4,68 [2,99] | *** |
| Polyol 3 | *** | *** | 5,52 [1,61] |
| H Si 2311® | *** | 2,15 [1,38] | 2,08 [1,33] |
| B 8901® | *** | 0,84 [0,54] | 0,74 [0,47] |
| A 1100® | 0,005 [0,002] | 0,005 [0,002] | 0,005 [0,002] |
| MF 7980® (% i.Elastomer) | 15 % | 15 % | 15 % |
| MV bei KZ = 100 (Pol : Iso) | 100,00 : 140,63 | 100,00 : 56,67 | 100,00 : 56,58 |
| Kennzahl | 110 | 110 | 110 |
| Isocyanat (% NCO) | N 3300 | N 3300 | N 3300 |
| Mol/kg H : U | 0,01 : 2,98 | 0,01 : 1,84 | 0,01 : 1,84 |
| Mol Knoten/kg Elastomer | 1,301 | 0,811 | 0,895 |
| Mechanik | | | |
| Shore D | 84 | 54 | 45 |
| Rohdichte (g/cm$^3$) | - | 1,263 | 1,246 |
| Wasseraufnahme 1.Tag (%) | - | 2,17 | 2,34 |
| Wasseraufnahme 7. Tag (%) | - | 4,5 | 4,71 |
| Spannung 10 % (MPa) | 0 | 10 (8) | 6 (5) |
| Spannung 100 % (MPa) | 0 | 0 (0) | 0 (0) |
| Reißfestigkeit (MPa) | 70 (67) | 13 (11) | 10 (10) |
| Bruchdehnung (%) | 2 (2) | 66 (69) | 80 (76) |
| SAG-Test 100 mm (mm) | 42 | 54 | 51 |
| SAG-Test 150 mm (mm) | - | - | - |
| Weiterreißfestigkeit (KN/m) | - | 45 (34) | 23 (19) |

Tabelle 1b

| Erfindungsgemäße Beispiele (Glasgehalt) | | |
|---|---|---|
| Beispiel | 9 | 10 |
| Polyol 1 | 53,18 [31,79] | 51,08 [30,53] |
| Polyol 2 | *** | 39,33 [23,50] |

Tabelle 1b   (fortgesetzt)

| Erfindungsgemäße Beispiele (Glasgehalt) | | |
|---|---|---|
| Beispiel | 9 | 10 |
| Polyol 4 | 38,67 [23,11] | *** |
| Tinuvin B 75® | 1,72 [1,03] | 1,72 [1,03] |
| Fomrez UL 28® | 1,34 [0,80] | 1,34 [0,80] |
| Dabco 33 LV® | 0,34 [0,20] | 0,34 [0,20] |
| DBTL® | 0,08 [0,05] | 0,08 [0,05] |
| Polyol 3 | 1,66 [0,99] | 3,10 [1,85] |
| H Si 2311® | 2,23 [1,33] | 2,23 [1,33] |
| B 8901® | 0,79 [0,47] | 0,79 [0,47] |
| A 1100® | 0,005 [0,003] | 0,005 [0,002] |
| MF 7980® (% i. Elastomer) | 15 % | 20 % |
| MV bei KZ = 100 (Pol : Iso) | 100,00 : 67,31 | 100,00 : 67,33 |
| Kennzahl | 110 | 110 |
| Isocyanat (% NCO) | N3300 | N3300 |
| Mol/kg H : U | 0,01 : 2,05 | 0,01 : 2,05 |
| Mol Knoten/kg Elastomer | 1,000 | 1,000 |
| Mechanik | | |
| Shore D | 68 | 63 |
| Plattenstärke (mm) | 2,80 | 2,81 |
| Rohdichte (g/cm$^3$) | 1,279 | 1,319 |
| Wasseraufnahme 1. Tag (%) | 0,66 | 0,92 |
| Wasseraufnahme 7. Tag (%) | 1,55 | |
| Spannung 10 % (MPa) | 24 (24) | 27 (21) |
| Spannung 100 % (MPa) | 0 (0) | 0 (0) |
| Reißfestigkeit (MPa) | 26 (25) | 27 (21) |
| Bruchdehnung (%) | 14 (15) | 13 (52) |
| SAG-Test 100 mm (mm) | 61 | 67 |
| SAG-Test 150 mm (mm) | - | - |
| Weiterreißfestigkeit (KN/m) | 53 (58) | 64 (64) |
| Schwindung (längs) (%) | 0,609 | 0,561 |
| Schwindung (quer) (%) | 1,050 | 1,334 |

Tabelle 1c

| Erfindungsgemäße Beispiele | | | | |
|---|---|---|---|---|
| Beispiel | 11 | 12 | 13 | 14 |
| Polyol 1 | 51,08 (30,53) | 49,54 (29,97) | 50,63 (30,43) | 54,31 (31,48) |
| Polyol 2 | 39,33 (23,50) | 38,14 (23,07) | 38,99 (23,43) | 31,53 (18,28) |
| Polyol 5 | *** | *** | *** | 3,37 (1,95) |

Tabelle 1c  (fortgesetzt)

| Erfindungsgemäße Beispiele | | | | |
|---|---|---|---|---|
| Beispiel | 11 | 12 | 13 | 14 |
| Jeffamin D 400® Polyol 12 | *** | *** | *** | 3,19 (1,85) |
| Tinuvin B 75® | 1,72 (1,03) | 1,67 (1,01) | 1,71 (1,03) | 1,77 (1,03) |
| Fomrez UL 28® | 1,34 (0,80) | 1,30 (0,79) | 1,33 (0,80) | 1,38 (0,80) |
| Dabco 33 LV® | 0,34 (0,20) | 0,33 (0,20) | 0,34 (0,20) | 0,35 (0,20) |
| DBTDL® | 0,08 (0,05) | 0,08 (0,05) | 0,08 (0,05) | 0,08 (0,05) |
| Polyol 3 | 3,10 (1,85) | 3,01 (1,82) | 3,07 (1,85) | *** |
| Zinkstearat | *** | 3,01 (1,82) | 3,07 (1,85) | 3,10 (1,85) |
| H Si 2311® | 2,23 (1,33) | 2,16 (1,31) | *** | *** |
| B 8901® | 0,79 (0,47) | 0,77 (0,46) | 0,78 (0,47) | 0,81 (0,47) |
| A 1100® | 0,005 (0,003) | 0,005 (0,003) | 0,005 (0,003) | 0,005 (0,003) |
| MF 7980® (% i.Elastomer) | 15% | 15% | 15% | 15% |
| MV bei KZ = 100 (Polo:Iso) | 100,00 : 67,33 | 100,00 : 65,31 | 100,00 : 66,41 | 100,00 : 72,52 |
| Kennzahl | 110 | 110 | 110 | 110 |
| Isocyanat (% NCO) | N 3300 | N 3300 | N 3300 | N 3300 |
| Mol/kg H:U | 0,01 : 2,05 | 0,01 : 2,01 | 0,01: 2,03 | 0,1 : 2,05 |
| Mol Knoten/kg Elastomer | 1,000 | 0,982 | 0,992 | 1,000 |
| Mechanik | | | | |
| Shore D | 60 | 59 | 63 | 66 |
| Plattenstärke (mm) | 2,81 | 2,80 | 2,85 | 2,81 |
| Rohdichte (g/cm$^3$) | 1,273 | 1,272 | 1,255 | 1,284 |
| Wasseraufnahme 1. Tag (%) | 1,35 | 1,21 | 1,26 | 0,84 |
| Wasseraufnahme 7. Tag (%) | 3,07 | 2,84 | 3,06 | 2,21 |
| Spannung 10 % (MPa) | 15 (12) | 18 (17) | 19 (19) | 19 (18) |
| Spannung 100 % (MPa) | 0 (0) | 0 (0) | 0 (0) | 0 (0) |
| Reißfestigkeit (MPa) | 15 (13) | 19 (17) | 20 (20) | 20 (19) |
| Bruchdehnung (%) | 63 (99) | 58 (64) | 41 (43) | 84 (100) |
| SAG-Test 100 mm (mm) | 50 | 53 | 36 | 20 |
| SAG-Test 150 mm (mm) | - | - | - | 78 |
| Weiterreißfestigkeit (%) | 60 (49) | 66 (60) | 69 (60) | 77 (71) |
| Schwindung (längs) (%) | 0,579 | 0,825 | 0,886 | 0,713 |
| Schwindung (quer) (%) | 1,254 | 1,409 | 1,313 | 1,465 |
| Trennverhalten Anguß | befriedigend | gut bis sehr gut | gut | gut |
| Trennverhalten Platte | gut | sehr gut | sehr gut | sehr gut |

Tabelle 2a

| Nicht erfindungsgemäße Beispiele | | | |
|---|---|---|---|
| Beispiel | 16 | 17 | 18 |
| Polyol 2 | 26,10 (15,60) | 42,66 (25,49) | *** |
| Polyol 6 | *** | 47,70 (28,51) | 46,70 (27,91) |
| Polyol 7 | 14,28 (8,53) | *** | *** |
| Polyol 8 | 49,98 (29,87) | *** | *** |
| Polyol 9 | *** | *** | 43,66 (26,09) |
| Polyol 3 | 3,09 (1,85) | 3,10 (1,85) | 3,10 (1,85) |
| Tinuvin B 75® | 1,77 (1,06) | 1,77 (1,06) | 1,77 (1,06) |
| Fomrez UL 28® | 1,34 (0,80) | 1,34 (0,80) | 1,34 (0,80) |
| Dabco 33 LV® | 0,34 (0,20) | 0,34 (0,20) | 0,34 (0,20) |
| DBTDL® | 0,08 (0,05) | 0,08 (0,05) | 0,08 (0,05) |
| H Si 2311® | 2,23 (1,33) | 2,23 (1,33) | 2,23 (1,33) |
| B 8901® | 0,79 (0,47) | 0,79 (0,47) | 0,79 (0,47) |
| A 1100® | 0,005 (0,003) | 0,005 (0,003) | 0,005 (0,003) |
| MF 7980 (% i.Elastomer) | 15 % | 15 % | 15 % |
| MV bei KZ = 100 (Pol:Iso) | 100,00 : 67,34 | 100,00:67,34 | 100,00:67,34 |
| Kennzahl | 110 | 110 | 110 |
| Isocyanat (% NCO) | N 3300 | N 3300 | N 3300 |
| Mol/kg H:U | 0,01 : 2,05 | 0,01 : 2,05 | 0,01 : 2,05 |
| Mol Knoten/kg Elastomer | 1,000 | 1,000 | 1,000 |
| Mechanik | | | |
| Shore D | 23 | 23 | 20 |

Keine Mechanik meßbar, da die Formteile mit der Hand leicht einzureißen waren.

Beispiele für Füllstoffhaltevermögen von Polyolformulierungen:

Sedimentationsverhalten:

Geräte:

    Laborrührer (Fa. Jahnke u. Kunkel)
    Flügelrührer $\varnothing$ 100 mm
    Weißblechdose 1000 ml
    Meßzylinder (500:5) DIN In 20°C ± 2,5 ml

Durführung:

Die in Tabelle 3 aufgeführten Polyolgemische wurden in einer 1000 ml Weißblechdose vorgelegt. Die entsprechende Menge Glasfaser (MF 7980) wurde bei Raumtemperatur zugegeben und mit einem Laborflügelrührer ($\varnothing$ 100 mm) bei einer Rührgeschwindigkeit von max. 1000 U/min innerhalb von 5 Minuten eingerührt.
500 ml (500 Skalenteile SKT) des Polyol/Glasfaser-Gemisches wurden anschließend in einen Meßzylinder überführt.

Auswertung:

Zu Beginn der Messung war eine homogene Verteilung der Glasfaser über die gesamte Meßstrecke (500 SKT) zu beobachten.

Der in der Tabelle angegebene Wert Sedimentation ("Phasentrennung" Glas/Polyol) beschreibt die Höhe der sedimentierten Glasfaser (SKT) in der Polyolkomponente nach 70 Stunden bei Raumtemperatur.

**Tabelle 3** Sedimentation von Glasfasern in erfindungsgemäßen und nicht erfindungsgemäßen Polyolgemischen

| Beispiel | 19 | 20 | 21 | 22 | 23 | 24 |
|---|---|---|---|---|---|---|
| Phasentrennung | keine | ja | keine | keine | ja | ja |
| Polyol 1 | 51,08 | *** | *** | *** | *** | *** |
| Polyol 10 | *** | 51,08 | *** | *** | *** | *** |
| Polyol 7 | *** | *** | *** | 14,28 | *** | *** |
| Polyol 8 | *** | *** | *** | 49,98 | *** | *** |
| Polyol 2 | 39,33 | 39,33 | 90,41 | 26,1 | *** | *** |
| Polyol 11 | *** | *** | *** | *** | 75,20 | 78,20 |
| Ethylenglykol | *** | *** | *** | *** | 21,20 | 21,20 |
| DETDA® | *** | *** | *** | *** | 6,00 | *** |
| Tinuvin B 75 | 1,72 | 1,72 | 1,72 | 1,77 | *** | *** |
| Fomrez UL 28® | 1,34 | 1,34 | 1,34 | 1,34 | *** | *** |
| Dabco 33 LV® | 0,34 | 0,34 | 0,34 | 0,34 | 0,50 | 0,50 |
| DBTDL® | 0,08 | 0,08 | 0,08 | 0,08 | 0,10 | 0,10 |
| Polyol 3 | 3,10 | 3,10 | 3,10 | 3,10 | *** | *** |

EP 0 749 995 B1

| Beispiel | 19 | | 20 | | 21 | | 22 | | 23 | | 24 | |
|---|---|---|---|---|---|---|---|---|---|---|---|---|
| H Si 2311® | 2,23 | | 2,23 | | 2,23 | | 2,23 | | *** | | *** | |
| B 8901® | 0,79 | | 0,79 | | 0,79 | | 0,79 | | *** | | *** | |
| A 1100® | 0,005 | | 0,005 | | 0,005 | | 0,005 | | *** | | *** | |
| OH-Zahl / Funktionalität | 193,3/2,11 | | 193,3/2,11 | | 49,3/2,49 | | 193,4/2,11 | | 431,0/2,03 | | 407,0/2,04 | |
| Polyol (%) | 76,5 | 69,7 | 76,5 | 69,7 | 76,5 | 69,7 | 76,5 | 69,7 | 76,5 | 69,7 | 76,5 | 69,7 |
| Glasfaser MF 7980 (%) | 23,5 | 30,3 | 23,5 | 30,3 | 23,5 | 30,3 | 23,5 | 30,3 | 23,5 | 30,3 | 23,5 | 30,3 |
| Sedimentation (SKT) | 500 | 500 | 190 | 260 | 260 | 350 | 170 | 240 | 310 | 430 | 410 | 490 |

500 ▲ nicht sedimentiert

13

**EP 0 749 995 B1**

**Patentansprüche**

1. Gegebenenfalls Harnstoffgruppen aufweisende Polyurethan-Elastomere auf der Basis von

   a) einer flüssigen, aliphatischen und/oder alicyclischen Polyisocyanatkomponente,

   b) einer isocyanatreaktiven Verbindung mit einem mittleren Molekulargewicht von 1000 bis 6000 und einer mittleren Funktionalität $\geq 2$,

   c) isocyanatreaktive Verbindungen mit einem Molekulargewicht <1000, bevorzugt <500, wobei mindestens eine dieser Verbindungen eine Funktionalität $\geq 2$ aufweist,

   d) Füllstoffen auf Elastomer bezogen, 1 bis 30 Gew.-%,

   e) gegebenenfalls den in der Polyurethanchemie an sich bekannten Hilfs- und Zusatzmitteln,

   **dadurch gekennzeichnet, dass** in der Komponente c) mindestens eine der isocyanatreaktiven Verbindungen ein Polyesteretherpolyol mit 3 - 7 Estergruppen/kg Polyesteretherpolyol ist, wobei das Polyesteretherpolyol durch Umsetzung von aromatischen Carbonsäureanhydriden mit (oligo) Ethylenglykolen und anschließender Ethoxylierung erhalten wird.

2. Reaktionsspritzgussverfahren zur Herstellung von gegebenenfalls zellförmigen, elastischen Formkörpern mit einer geschlossenen Oberflächenschicht und einer Dichte von >0,9 g/cm$^3$ aus gegebenenfalls Harnstoffgruppen aufweisenden Polyurethanelastomeren auf der Basis von

   a) einer flüssigen, aliphatischen und/oder alicyclischen Polyisocyanatkomponente,

   b) einer isocyanatreaktiven Verbindung mit einem mittleren Molekulargewicht von 1000 bis 6000 und einer mittleren Funktionalität $\geq 2$,

   c) mindestens einer isocyanatreaktiven Verbindung mit einem Molekulargewicht <1000, bevorzugt <500, und einer Funktionalität $\geq 2$,

   d) Füllstoffen auf Elastomer bezogen, 1 bis 30 Gew.-%,

   e) gegebenenfalls den in der Polyurethanchemie an sich bekannten Hilfsund Zusatzmitteln,

   unter Einhaltung einer Isocyanatkennzahl von 90 bis 120,
   **dadurch gekennzeichnet, dass** in der Komponente c) mindestens eine der isocyanatreaktiven Verbindungen ein Polyesteretherpolyol unit 3-7 Estergruppen/kg Polyesteretherpolyol ist, wobei das Polyesteretherpolyol durch Umsetzung von aromatischen carbonsäure anhydriden mit (oligo) Ethylenglycolen und anschließender Ethoxylierung erhalten wird.

3. Verwendung der Polyurethanelastomeren gemäß Anspruch 1 im Automobilbau.

**Claims**

1. Polyurethane elastomers optionally containing urea groups and based on

   a) a liquid, aliphatic and/or alicyclic polyisocyanate component,

   b) an isocyanate-reactive compound with an average molecular weight of 1000 to 6000 and an average functionality of $\geq 2$,

   c) isocyanate-reactive compounds with a molecular weight of <1000, preferably of <500, wherein at least one of these compounds exhibits a functionality of $\geq 2$,

d) 1 to 30 wt.% of fillers, relative to the elastomer,

e) optionally auxiliary substances and additives known *per se* in polyurethane chemistry,

**characterised in that** at least one of the isocyanate-reactive compounds in component c) is a polyesterether polyol with 3-7 ester groups/kg of polyesterether polyol, wherein the polyesterether polyol is obtained by reacting aromatic carboxylic anhydrides with (oligo) ethylene glycols and subsequent ethoxylation.

2. A reaction injection moulding process for the production of optionally cellular, elastic mouldings with a closed surface layer and a density of >0.9 g/cm$^3$ prepared from polyurethane elastomers optionally containing urea groups and based on

a) a liquid, aliphatic and/or alicyclic polyisocyanate component,

b) an isocyanate-reactive compound with an average molecular weight of 1000 to 6000 and an average functionality of $\geq$2,

c) at least one isocyanate-reactive compound with a molecular weight of <1000, preferably of <500, and a functionality of $\geq$2,

d) 1 to 30 wt.% of fillers, relative to the elastomer,

e) optionally auxiliary substances and additives known *per se* in polyurethane chemistry,

while maintaining an isocyanate index of 90 to 120,
**characterised in that** at least one of the isocyanate-reactive compounds in component c) is a polyesterether polyol with 3-7 ester groups/kg of polyesterether polyol, wherein the polyesterether polyol is obtained by reacting aromatic carboxylic anhydrides with (oligo) ethylene glycols and subsequent ethoxylation.

3. Use of the polyurethane elastomers according to claim 1 in automotive construction.

**Revendications**

1. Elastomères de polyuréthane contenant le cas échéant des groupes urée, à base de

a) un composant polyisocyanate aliphatique et/ou alicyclique liquide,
b) un composé réactif avec les isocyanates à un poids moléculaire moyen de 1000 à 6000 et une fonctionnalité moyenne $\geq$ 2,
c) des composés réactifs avec les isocyanates à un poids moléculaire < 1000, de préférence < 500, l'un au moins de ces composés ayant une fonctionnalité $\geq$ 2,
d) des matières de charge en proportion de 1 à 30 % du poids de l'élastomère,
e) le cas échéant, les produits auxiliaires et additifs connus en soi dans la chimie des polyuréthanes,

**caractérisés en ce que** dans le composant c), au moins un des composés réactifs avec les isocyanates est un polyester-éther-polyol contenant 3 à 7 groupes ester/kg et qui a été obtenu par réaction d'anhydrides d'acides carboxyliques aromatiques avec des (oligo)éthylène-glycols suivie d'une éthoxylation.

2. Procédé exploitant la technique de moulage réactif par injection pour la fabrication d'objets moulés élastiques éventuellement alvéolaires à couche de surface fermée et densité > 0,9 g/cm$^3$ à partir d'élastomères de polyuréthanes contenant le cas échéant des groupes urée à base de

a) un composant polyisocyanate aliphatique et/ou alicyclique liquide,
b) un composé réactif avec les isocyanates à un poids moléculaire de 1000 à 6000 et une fonctionnalité moyenne $\geq$ 2,
c) au moins un composé réactif avec les isocyanates à un poids moléculaire < 1000, de préférence < 500, et à une fonctionnalité $\geq$ 2,
d) des matières de charge en proportion de 1 à 30 % du poids de l'élastomère,

e) le cas échéant, les produits auxiliaires et additifs connus en soi dans la chimie des polyuréthanes, en respectant un indice d'isocyanate de 90 à 120,

**caractérisé en ce que**, dans le composant c), au moins un des composés réactifs avec les isocyanates est un polyester-éther-polyol contenant 3 à 7 groupes ester/kg et qui a été obtenu par réaction d'anhydrides d'acides carboxyliques aromatiques avec des (oligo)éthylèneglycols suivie d'une éthoxylation.

3. Utilisation des élastomères de polyuréthanes selon revendication 1 dans la construction automobile.